# FASCICULE DE BREVET EUROPEEN

(11) **EP 0 521 774 B1**
(45) Date de publication et mention de la délivrance du brevet: **24.04.1996**
(21) Numéro de dépôt: 92401864.1
(22) Date de dépôt: 30.06.1992
(51) Int. Cl.: C21D 6/00, C21D 8/02, C21D 9/46, B32B 15/01

(54) **Procédé de fabrication d'une tôle plaquée comportant une couche inoxydable et tôle plaquée obtenue**
Verfahren zum Herstellen plattierter Bleche aus Stahl mit einer nichtrostenden Metallauflage
Method for producing a clad steel sheet with a layer of stainless metal

(30) Priorité: 03.07.1991 FR 9108316
(43) Date de publication de la demande: 07.01.1993
(73) Titulaire: CREUSOT-LOIRE INDUSTRIE, F-92800 Puteaux (FR)
(72) Inventeur: Charles, Jacques, F-71670 Le Breuil (FR); Schweitzer, Gilbert, F-71200 Le Creusot (FR); Jobard, Daniel, F-71670 Le Breuil (FR); Beguinot, Jean, F-71200 Le Creusot (FR)
(74) Mandataire: Bouget, Lucien

(56) Documents cités:
- EP-A- 0 320 773
- EP-A- 0 366 646
- DE-C- 3 733 481
- FR-A- 2 594 732
- US-A- 4 736 884

## Description

L'invention est relative à la fabrication de tôles plaquées comportant un placage en acier ou alliage inoxydable sur une base en acier de construction et aux tôles obtenues.

Les tôles plaquées constituées d'un placage par exemple en acier inoxydable sur une base en acier de construction tel qu'un acier au carbone manganèse sont bien connues. Pour conférer à la base des caractéristiques mécaniques satisfaisantes, on fait subir à la tôle plaquée un traitement de normalisation entre environ 950°C et 1020°C. Ce procédé présente un inconvénient pour certaines nuances de placage qui résulte de ce que la température de normalisation est insuffisante pour mettre en solution les carbures ou les précipités intermétalliques qui peuvent se trouver dans le métal de placage ; les carbures détériorent la tenue à la corrosion du placage et les précipités intermétalliques peuvent induire une fragilisation du placage.

Pour dissoudre les carbures et les précipités intermétalliques il serait nécessaire de porter la tôle plaquée à une température pouvant atteindre 1150°C. Mais de telles températures font grossir excessivement le grain du métal de la base, ce qui détériore les caractéristiques mécaniques de celle-ci ; en particulier, avec des normalisations à de telles températures, il n'est pas possible d'obtenir des températures de transition ductile/fragile inférieures à - 20°C.

Le brevet allemand DE 37 33 481 propose un procédé de réalisation de tôles plaquées par laminage contrôlé suivi d'une hypertrempe éventuellement interrompue ou suivie d'un revenu mais ce procédé présente l'inconvénient de comporter un laminage contrôlé à des températures qui favorisent la précipitation de carbures ou de composés intermétalliques dans certaines nuances de placage, ce qui réduit leur résistance à la corrosion.

Les nuances de placage pour lesquelles les techniques connues de fabrication de tôles plaquées ne sont pas satisfaisantes nécessitent, pour avoir leur pleine résistance à la corrosion, un traitement d'hypertrempe à partir d'une température supérieure à 1050°C. Lorsqu'on fait subir un tel traitement à des tôles plaquées ayant une base en acier au carbone manganèse selon la technique actuelle, les caractéristiques mécaniques de la base, notamment sa résilience, sont très dégradées. En effet, le chauffage à une température supérieure à 1050°C fait considérablement grossir le grain du métal de la base et pour la résilience, il n'est pas possible d'obtenir des températures de transition ductile/fragile inférieures à - 20°C.

Le brevet français FR 2.594.732 propose un procédé de fabrication de tôles plaquées dans lequel on hypertrempe par refroidissement rapide jusqu'à une température comprise entre 550° et 620°C puis par refroidissement lent la tôle plaquée. Ce procédé a l'inconvénient de conduire pour la base à une structure ferrite-perlite dont la résilience n'est pas très bonne.

Le but de la présente invention est de proposer un procédé pour la fabrication de tôles plaquées comportant un placage ayant une très bonne tenue à la corrosion et une base ayant de très bonnes caractéristiques mécaniques.

A cet effet, l'invention a pour objet un procédé de fabrication d'une tôle plaquée comportant une couche de placage en acier ou alliage inoxydable ayant une très bonne tenue à la corrosion et une couche de base en acier de construction présentant de très bonnes caractéristiques mécaniques, procédé selon lequel :
- on réalise un ensemble plaqué constitué par au moins une tôle plaquée et comportant au moins une couche de placage en un alliage ou acier inoxydable et au moins une couche de base en acier faiblement allié de construction renfermant, en pourcentages en poids, du carbone à raison de moins de 0,14 %, du titane à raison de moins de 0,06 %, de l'azote à raison d'au moins 0,005 %, au moins un élément choisi parmi le manganèse, le silicium, le nickel et le bore en une quantité suffisante pour obtenir une bonne trempabilité de la couche de base et au moins un élément carburigène choisi parmi le niobium, le vanadium, le chrome ou le molybdène,
- on chauffe l'ensemble plaqué à une température d'hypertrempe au moins égale à 1050°C et qui soit suffisante pour mettre en solution les composés intermétalliques et les carbures dans la couche de placage, et
- on réalise une hypertrempe de l'ensemble plaqué depuis la température d'hypertrempe par refroidissement rapide jusqu'à une température inférieure à 550°C et plus lentement jusqu'à l'ambiante, de manière à ce que le métal de la base ait une structure aciculaire avec de fins précipités de carbures en évitant l'obtention d'une structure ferrite-perlite.

L'hypertrempe peut être réalisée par refroidissement rapide jusqu'à une température comprise entre 500°C et 400°C, puis plus lentement jusqu'à l'ambiante.

L'hypertrempe peut être réalisée à l'eau jusqu'à une température d'environ 500°C puis à l'air et l'ensemble plaqué ne subit pas de revenu.

L'hypertrempe peut également être réalisée à l'huile et n'être pas suivie de revenu.

L'hypertrempe peut enfin être réalisée à l'eau jusqu'à la température ambiante et être alors suivie d'un revenu à une température comprise entre 450°C et 680°C ; ce traitement de revenu est adapté pour ne pas provoquer de précipitations de carbures ou de phases intermétalliques dans le métal de placage.

Pour la base, on utilise de préférence un acier contenant en poids :
moins de 0,14 % de carbone
moins de 0,06 % de titane
plus de 0,005 % d'azote
moins de 2,5 % de manganèse
éventuellement du nickel ou du bore,
et des éléments susceptibles de former des carbures précipités pris parmi les éléments suivants : V, Nb, Cr, Mo.

De préférence la somme des teneurs en chrome et molybdène est comprise entre 0,2 % et 1,5 %.

L'invention concerne également une tôle plaquée réalisée selon le procédé objet de l'invention. Dans cette tôle plaquée, le métal de placage est exempt de carbures ou de phases intermétalliques précipités ; le métal de la base a une structure aciculaire avec de fins précipités de carbures.

De préférence, le métal de placage est un acier superausténitique ou superausténoferritique ou un alliage à base de nickel contenant en poids plus de 20 % de chrome et plus de 2 % de molybdène.

De telles tôles plaquées ont un placage dont la tenue à la corrosion est optimale et la base présente de très bonnes caractéristiques mécaniques tant en traction qu'en résilience.

L'invention va maintenant être décrite de façon plus précise mais non limitative.

Pour réaliser une tôle plaquée selon l'invention, on plaque de façon connue en soi par colaminage ou par explosion et relaminage un métal de placage sur une base en acier de construction.

Le métal de placage est un acier superausténitique ou superausténoferritique ou un alliage à base de nickel avec de fortes additions de chrome ou de molybdène pour le rendre inoxydable. Ces alliages très sensibles à la précipitation de carbures ou de phases intermétalliques correspondent notamment aux codes américains UNS dont le numéro et la composition chimique moyenne en % est indiquée au tableau ci-dessous :

| N° UNS | Fe | Ni | Cr | Mo | Cu | Autres |
|---|---|---|---|---|---|---|
| N 08932 | * | 25 | 25 | 5 | 1,5 | |
| S 32550 | * | 7 | 25 | 3 | 1,6 | |
| N 06022 | 3 | * | 22 | 13 | - | Co=1W=3 |
| N 10276 | 4 | * | 16 | 16 | - | Co=1W=3 |
| N 06030 | 15 | * | 29 | 5 | 2 | Co=1W=3 |
| N 06455 | 3max | * | 16 | 15 | - | Co= 2max |
| N 10665 | 2max | 4 | 1 | 26 | - | |
| S 08925 | * | 25 | 20 | 6 | 1 | N = 0,2 |
| S 08994 | * | 25 | 20 | 4,5 | 1,5 | |

Lorsque le placage est réalisé par colaminage d'un bloc, on obtient un sandwich composé de deux tôles plaquées accolées par leurs couches de placage entre lesquelles est disposée une fine couche de séparation. Lorsque le placage est réalisé par explosion et relaminage, on obtient une tôle plaquée. L'ensemble plaqué obtenu après laminage (sandwich ou tôle plaquée) est alors chauffé à une température suffisante pour remettre en solution les carbures ou les phases intermétalliques qui ont pu précipiter dans le métal de placage.

L'homme de métier sait déterminer cette température en fonction de la nature du métal de placage, mais celle-ci est toujours supérieure ou égale à 1050°C; elle peut atteindre 1150°C.

Après chauffage, l'ensemble plaqué est hypertrempé et subit éventuellement un revenu de telle sorte que :
- le métal de placage soit exempt de carbures ou de phases intermétalliques précipités,
- l'acier de la base ait une structure aciculaire de trempe avec préférentiellement de fins précipités de carbures.

Deux modes de réalisation sont possibles.

Dans le premier mode de réalisation, l'ensemble plaqué est refroidi très rapidement jusqu'à une température inférieure à 550° et de préférence comprise entre 500°C et 400°C, puis plus lentement jusqu'à l'ambiante.

Pour autant que la composition chimique de la base soit adaptée comme il est indiqué ci-dessous, le refroidissement rapide en-dessous de 550°C permet :
- d'éviter de former des précipités dans le métal de placage,
- d'obtenir une structure aciculaire dans l'acier de base.

Le refroidissement plus lent jusqu'à l'ambiante permet de former de fins précipités de carbures dans l'acier de la base, ce qui en améliore les caractéristiques mécaniques.

Ce refroidissement étagé peut être obtenu soit par trempe à l'eau jusqu'à une température comprise entre 550° et 400°C suivi d'un refroidissement à l'air jusqu'à l'ambiante, soit préférentiellement par trempe à l'huile; en effet, la trempe à l'huile conduit naturellement à un refroidissement rapide au-dessus de 500°C et beaucoup plus lent en-dessous. Plus généralement, on peut utiliser un fluide de trempe permettant d'obtenir une vitesse de trempe qui varie fortement avec la température.

Dans ce mode de réalisation, il n'est pas utile de faire un revenu.

Le second mode de réalisation consiste à hypertremper à l'eau jusqu'à l'ambiante et à faire subir au produit un revenu à une température T et pendant un temps t tels qu'il n'y ait pas précipitation de carbures ou de phases intermétalliques dans le métal de placage.

L'hypertrempe permet d'éviter la formation de précipités dans le métal de placage au cours du refroidissement et d'obtenir une structure aciculaire dans l'acier de la base.

Le revenu permet d'obtenir de fins précipités de carbures dans l'acier de la base.

Pour éviter la précipitation de carbures ou de phases intermétalliques dans le métal de placage, l'homme de métier sait adapter la température et la durée du revenu.

Pour les deux modes de réalisation, on a constaté qu'afin d'obtenir des caractéristiques mécaniques (traction et résilience) satisfaisantes de la base, il était nécessaire d'utiliser pour la base un acier contenant :
- du titane pour éviter le grossissement du grain à haute température, dans une proportion pondérale inférieure à 0,06 % et de préférence entre 0,03 % et 0,045 % ;
- peu de carbone pour obtenir une structure de trempe ayant une bonne résilience ; l'acier de la couche de base doit renfermer moins de 0,14 % de carbone et de préférence de 0,03 % à 0,1 % de carbone ;
- des éléments d'alliage pour obtenir une trempabilité suffisante, par exemple de 1 % à 2,0 % de manganèse et de 0,1 % à 1 % de silicium, du nickel ou du bore ; l'homme de métier sait adapter ces teneurs en fonction de l'épaisseur du produit à hypertremper ;
- des éléments carburigènes tels que Nb, V, Cr, Mo pour former de fins précipités de carbures qui durcissent le métal ; de préférence, on choisira un acier contenant du Cr et du Mo et tel que 0,2 % < Cr + Mo < 1,5 %.

Cet acier doit contenir en outre suffisamment d'azote pour réagir avec le titane, et on peut lui ajouter de 0,01 % à 0,07 % d'aluminium pour ajuster la teneur en azote libre ; la teneur en azote satisfaisante est celle que l'on obtient habituellement dans les aciers par exemple élaborés au four électrique, elle est d'au moins 0,005 % d'azote.

A titre d'exemple, avec un placage en UNS n° N 06022 dont la composition est indiquée au tableau ci-dessus et avec pour la base un acier contenant en poids :
C = 0,05 %
Si = 0,3 %
Mn = 1,9 %
Cr = 0,8 %
Mo = 0,35 %
Al = 0,03 %
Ti = 0,04 %
N = 0,0095 %.

On a réalisé des tôles plaquées dont le placage faisait 3 mm d'épaisseur et la base 6 mm.

Ces tôles plaquées ont été chauffées à 1200°C et trempées à l'huile.

Le placage était exempt de précipitations et la base avait une structure aciculaire avec de fins précipités de carbures et présentait les caractéristiques mécaniques suivantes :
Re = 420 MPa
Rm = 680 MPa
KCV = 150 J/cm à - 20°C.

Dans un autre exemple de réalisation, avec un placage UNS n° N 06022 on a utilisé pour la base un acier contenant :
C = 0,065 %
Si = 0,3 %
Mn = 1,1 %
Ni = 0,5 %
Cr = 0,7 %
Mo = 0,3 %
Ti = 0,025 %
V = 0,06 %
Al = 0,025 %
N = 0,008 %.

On a réalisé des tôles plaquées dont le placage faisait 5 mm d'épaisseur et la base 15 mm.

Ces tôles plaquées ont été chauffées à 1200°C, hypertrempées à l'eau jusqu'à la température ambiante, puis ont subi un revenu entre 500°C et 550°C.

Le placage était exempt de précipitation et la base avait une structure aciculaire avec de fins précipités de carbures et présentait les caractéristiques mécaniques suivantes :
Re = 550 MPa
Rm = 670 MPa
KCV = 88 Joules/cm à - 20°C.

## Revendications

1. Procédé de fabrication d'une tôle plaquée comportant une couche de placage en acier ou alliage inoxydable ayant une très bonne tenue à la corrosion et une couche de base en acier de construction présentant de très bonnes caractéristiques mécaniques, procédé selon lequel :
- on réalise un ensemble plaqué constitué par au moins une tôle plaquée et comportant au moins une couche de placage en un alliage ou acier inoxydable et au moins une couche de base en acier faiblement allié de construction renfermant, en pourcentages en poids, du carbone à raison de moins de 0,14 % de carbone, du titane à raison de moins de 0,06 %, de l'azote à raison d'au moins 0,005 %, au moins un élément choisi parmi le manganèse, le silicium, le nickel et le bore en une quantité suffisante pour obtenir une bonne trempabilité de la couche de base et au moins un élément carburigène choisi parmi le niobium, le vanadium, le chrome ou le molybdène,
- on chauffe l'ensemble plaqué à une température d'hypertrempe au moins égale à 1050°C et qui soit suffisante pour mettre en solution les composés intermétalliques et les carbures dans la couche de placage, et
- on réalise une hypertrempe de l'ensemble plaqué depuis la température d'hypertrempe par refroidissement rapide jusqu'à une température inférieure à 550°C et plus lentement jusqu'à l'ambiante, de manière à ce que le métal de la base ait une structure aciculaire avec de fins précipités de carbures en évitant l'obtention d'une structure ferrite-perlite.

2. Procédé selon la revendication 1, caractérisé en ce qu'on réalise l'hypertrempe de l'ensemble plaqué par refroidissement rapide jusqu'à une température comprise entre 500°C et 400°C.

3. Procédé selon la revendication 1, caractérisé en ce que l'hypertrempe est réalisée à l'eau jusqu'à une température d'environ 500°C puis à l'air, l'ensemble plaqué ne subissant pas de revenu.

4. Procédé selon l'une quelconque des revendications 1 et 2, caractérisé en ce que l'hypertrempe est réalisée à l'huile, l'ensemble plaqué ne subissant pas de revenu.

5. Procédé selon la revendicatin 1, caractérisé en ce que l'hypertrempe est réalisée à l'eau jusqu'à l'ambiante, puis l'ensemble plaqué subit un traitement de revenu entre 450°C et 680°C, ce traitement étant adapté pour ne pas provoquer de précipitations de carbures ou de phases intermétalliques dans le métal de placage.

6. Procédé selon l'une quelconque des revendications 1 à 5, caractérisé en ce que, pour la base, on utilise un acier contenant en poids,
moins de 0,14 % de carbone,
moins de 0,06 % de titane,
plus de 0,005 % d'azote,
moins de 2,5 % de manganèse,
éventuellement du nickel ou de bore,
des éléments susceptibles de former des carbures précipités pris parmi le V, le Nb, le Cr, le Mo.

7. Procédé selon la revendication 6, caractérisé en ce que, pour la base, on utilise un acier tel que la somme des teneurs en chrome et en molybdène soit comprise entre 0,2 % et 1,5 %.

8. Tôle plaquée réalisée par le procédé selon l'une quelconque des revendications 1 à 7, caractérisée en ce que :
- le métal de placage est exempt de carbures ou de phases intermétalliques précipités,
- le métal de la base a une structure aciculaire avec de fins précipités de carbures.

9. Tôle plaquée selon la revendication 8, caractérisée en ce que le métal de placage est un acier superausténitique ou superausténoferritique ou un alliage à base de nickel contenant en poids plus de 20 % de chrome et plus de 2 % de molybdène.

## Patentansprüche

1. Verfahren zur Herstellung eines plattierten Blechs, bestehend aus einer Plattierungeschicht aus nichtrostendem Stahl oder nichtrostender Legierung mit einer sehr guten Korrosionsfestigkeit und aus einer Basisschicht aus Baustahl mit sehr guten mechanischen Eigenschaften, Verfahren, gemäß welchem
- man eine plattierte Einheit herstellt, die aus mindestens einem plattierten Blech besteht und mindestens eine Plattierungsschicht aus einer nichtrostenden Legierung oder einem nichtrostenden Stahl und mindestens eine Basisschicht aus schwach legiertem Baustahl umfaßt, der, in Gewichtsprozent, Kohlenstoff in einem Anteil von weniger als 0,14 % Kohlenstoff, Titan in einem Anteil von weniger als 0,06 %, Stickstoff in einem Anteil von wenigstens 0,005 %, wenigstens ein Element, das ausgewählt ist aus Mangan, Silicium, Nickel und Bor in einer ausreichenden Menge, um eine gute Härtbarkeit der Basisechicht zu erhalten, und mindestens ein Aufkohlungsmittel enthält, das aus Niob, Vanadium, Chrom oder Molybdän ausgewählt ist,
- man die plattierte Einheit auf eine Abschrecktemperatur von mindestens gleich 1050°C erhitzt, die ausreicht, um die intermetallischen Verbindungen und die Karbide der Plattierungsschicht in Lösung zu bringen, und
- man eine Abschreckung der plattierten Einheit durch schnelles Abkühlen von der Abschrecktemperatur bis auf eine Temperatur von unter 550°C und langsamer bis auf Raumtemperatur vornimmt, so daß das Metall der Basis eine nadelige Struktur mit feinen Karbidausfällungen hat, indem man die Bildung einer Ferrit-Perlit-Struktur vermeidet.

2. Verfahren nach Anspruch 1, dadurch gekennzeichnet, daß man die Abschreckung der plattierten Einheit durch schnelles Abkühlen bis auf eine Temperatur zwischen 500°C und 400°C vornimmt.

3. Verfahren nach Anspruch 1, dadurch gekennzeichnet, daß die Abschrackung mit Wasser bis auf eine Temperatur von ungefähr 500°C und dann mit Wasser vorgenommen wird, wobei die plattierte Einheit kein Anlassen erfährt.

4. Verfahren nach einem der Ansprüche 1 und 2, dadurch gekennzeichnet, daß die Abschreckung mit Öl vorgenommen wird, wobei die plattierte Einheit kein Anlassen erfährt.

5. Verfahren nach Anspruch 1, dadurch gekennzeichnet, daß die Abschreckung mit Wasser bis auf Raumtemperatur vorgenommen wird und daß dann die plattierte Einheit eine Anlaßbehandlung zwischen 450°C und 680°C erfährt, wobei diese Behandlung so eingestellt ist, daß im Plattierungsmetall keine Ausfällungen von Karbiden oder intermetallischen Phasen verursacht werden.

6. Verfahren nach einem der Ansprüche 1 bis 5, dadurch gekennzeichnet, daß man für die Basis einen Stahl verwendet, der in Gewicht enthält
weniger als 0,14 % Kohlenstoff,
weniger als 0,06 % Titan,
mehr als 0,005 % Stickstoff,
weniger als 2,5 % Mangan,
gegebenenfalls Nickel oder Bor,
Elemente, die ausgefällte Karbide bilden können und aus V, Nb, Cr, Mo genommen sind.

7. Verfahren nach Anspruch 6, dadurch gekennzeichnet, daß man für die Basis einen solchen Stahl verwendet, daß die Summe der Gehalte an Chrom und Molybdän zwischen 0,2 % und 1,5 % beträgt.

8. In dem Verfahren nach einem der Ansprüche 1 bis 7 hergestelltes plattiertes Blech, dadurch gekennzeichnet, daß
- das Plattierungsmetall frei von ausgefällten Karbiden oder intermetallischen Phasen ist,
- das Metall der Basis eine nadelige Struktur mit feinen Ausfällungen von Karbiden hat.

9. Plattiertes Blech nach Anspruch 8, dadurch gekennzeichnet, daß das Plattierungsmetall ein Superaustenit- oder Superaustenoferritstahl oder eine Legierung auf der Basis von Nickel ist, die mehr als 20 Gew.-% Chrom und mehr als 2 Gew.-% Molybdän enthält.

## Claims

1. Process for manufacturing a clad metal sheet comprising a cladding layer of stainless steel or alloy having a very high corrosion resistance and a base layer of structural steel having very good mechanical properties, according to which process:
- a clad assembly is produced which consists of at least one clad metal sheet and comprising at least one cladding layer of a stainless alloy or steel and at least one base layer of low-alloy structural steel containing, in percentages by weight, carbon at a carbon content of less than 0.14%, titanium at a content of less than 0.06%, nitrogen with a content of at least 0.005%, at least one element chosen from manganese, silicon, nickel and boron in a quantity sufficient to achieve good hardenability of the base layer and at least one carbide-forming element chosen from niobium, vanadium, chromium or molybdenum;
- the clad assembly is heated to a solutioning temperature at least equal to 1050°C, which is sufficient to dissolve the intermetallic compounds and the carbides in the cladding layer; and
- the clad layer is rapidly quenched from the solutioning temperature by rapidly cooling down to a temperature below 550°C and more slowly down to room temperature, so that the metal of the base has an acicular structure with fine carbide precipitates, preventing a ferrite-pearlite structure from being obtained.

2. Process according to Claim 1, characterized in that the clad assembly is rapidly quenched by rapidly cooling down to a temperature lying between 500°C and 400°C.

3. Process according to Claim 1, characterized in that the rapid quench is carried out in water down to a temperature of approximately 500°C and then in air, the clad assembly not undergoing annealing.

4. Process according to either of claims 1 and 2, characterized in that the rapid quench is carried out in oil, the clad assembly not undergoing annealing.

5. Process according to Claim 1, characterized in that the rapid quench is carried out in water down to room temperature and then the clad assembly undergoes an annealing treatment between 450°C and 680°C, thin treatment being designed not to cause precipitation of carbides and of intermetallic phases in the cladding metal.

6. Process according to any one of Claims 1 to 5, characterized in that, for the base, a steel is used which contains, by weight:
less than 0.14% of carbon,
less than 0.06% of titanium,
more than 0.005% of nitrogen;
less than 2.5% of manganese;
optionally nickel or boron;
elements capable of forming precipitated carbides, taken from V, Nb, Cr and Mo.

7. Process according to Claim 6, characterized in that, for the base, a steel is used such that the sum of the chromium and molybdenum contents is between 0.2% and 1.5%.

8. Clad metal plate produced by the process according to any one of Claims 1 to 7, characterized in that:
- the cladding metal is free of precipitated carbides or intermetallic phases;
- the metal of the base has an acicular structure with fine carbide precipitates.

9. Clad metal sheet according to Claim 8, characterized in that the cladding metal is a superaustinitic or superausteno-ferritic steel or a nickel-based alloy containing more than 20% of chromium and more than 2% of molybdenum by weight.
